# EUROPÄISCHE PATENTSCHRIFT

(11) **EP 2 613 494 B1**
(45) Veröffentlichungstag und Bekanntmachung des Hinweises auf die Patenterteilung: **29.08.2018**
(21) Anmeldenummer: 12000711.7
(22) Anmeldetag: 03.02.2012
(51) Int. Cl.: H04L 29/08, H04W 4/14, H04W 4/20

(54) **Vorrichtung zur Verfügungstellung einer Schnittstelle für eine Fernwartung von elektronischen, mit dem Internet verbundenen IP-Geräten und Verfahren zur Herstellung einer Kommunikationsverbindung für die Fernwartung von elektronischen, mit dem Internet verbundenen IP-Geräten über eine Schnittstelle**
Device for providing an interface for remote maintenance of electronic IP devices connected to the Internet and method for creating a communication link for the remote maintenance of electronic IP devices connected to the Internet through an interface
Dispositif de mise à disposition d'une interface pour un entretien à distance de périphériques IP électroniques connectés à Internet et procédé d'établissement d'une liaison de communication pour l'entretien à distance de périphériques IP électroniques connectés à Internet via une interface

(30) Priorität: 03.01.2012 DE 102012000041
(43) Veröffentlichungstag der Anmeldung: 10.07.2013
(73) Patentinhaber: CoM.s.a.t. GmbH Kommunikationssysteme, 68519 Viernheim (DE)
(72) Erfinder: Deike, Rainer, 68519 Viernheim (DE)
(74) Vertreter: Vonnemann, Gerhard

(56) Entgegenhaltungen:
- US-A1- 2004 067 761
- US-A1- 2007 169 107
- US-A1- 2008 101 278

## Beschreibung

### Technisches Gebiet:

Die Erfindung betrifft eine Vorrichtung zur Verfügungstellung einer Schnittstelle zur Herstellung einer Kommunikationsverbindung für eine Fernwartung von elektronischen, mit dem Internet, vorzugsweise über einen Gateway, verbundenen IP-Geräten, in welche eine spezifische Remotemanagement-Software implementiert ist, sowie ein Verfahren zur Herstellung einer Kommunikationsverbindung für die Fernwartung von elektronischen, mit dem Internet, vorzugsweise über einen Gateway, verbundenen IP-Geräten über eine Vorrichtung, welche eine Schnittstelle zu Verfügung stellt, wobei im IP-Gerät eine spezifische Remotemanagement-Software implementiert ist.

### Stand der Technik:

Durch die EP-A2-1903436 ist ein Computersystem mit Fernwartungsmöglichkeit bekannt geworden, welches einen Prozessor zum Ausführen eines ersten Programmcodes, einen ersten nichtflüchtigen Speicher zum Speichern des ersten Programmcodes zum Starten des Computersystems aufweist, wobei der erste nichtflüchtigen Speicher funktionsfähig mit dem Prozessor verbunden ist, sowie einen Systemüberwachungsbaustein, der mit dem Prozessor und dem ersten nichtflüchtigen Speicher funktionsfähig verbunden ist und dazu eingerichtet ist, das Computersystem auf Auftreten einer vorbestimmten Bedingung zu überwachen. Der Systemwachungsbaustein weist einen zweiten nichtflüchtigen Speicher zum Speichern eines zweiten Programmcodes zum Starten des Computersystems auf, wobei der Systemüberwachungsbaustein dazu eingerichtet ist, bei Auftreten der vorbestimmten Bedingung den zweiten Programmcode aus dem zweiten nichtflüchtigen Speicher in den ersten nichtflüchtigen Speicher zu kopieren, so dass der zweite Programmcode den ersten Programmcode ersetzt und für einen nachfolgenden Start des Computersystems zur Verfügung steht. In dem ersten und/oder dem zweiten nichtflüchtigen Speicher sind Versionsinformationen für den ersten und zweiten Programmcode gespeichert, wobei in dem Fall, dass der zweite Programmcode aktueller als der erste Programmcode ist, beim Starten des Computersystems der zweite Programmcode durch den Systemüberwachungsbaustein in den ersten nichtflüchtigen Speicher kopiert wird. Der Überwachungsbaustein weist eine Netzwerkschnittstelle auf, welche funktionsfähig mit dem Computersystem verbunden ist, wobei der Überwachungsbaustein dazu eingerichtet ist, den über die Netzwerkschnittstelle empfangenen Programmcode als zweiten Programmcode in dem zweiten nichtflüchtigen Speicher zu speichern. Dazu weist das Computersystem ein Netzteil mit einem Bereitschaftsmodus auf, mittels desselben wenigstens der Systemüberwachungsbaustein und die Netzwerkschnittstelle mit einer Betriebsspannung versorgt wird, so dass eine Aktualisierung des zweiten Programmcodes in dem Bereitschaftsmodus durchführbar ist.

Zum Aktualisieren des Programmcodes zum Starten des Computersystems werden die folgenden Schritte ausgeführt: - durch den Programmcode Ausführen eines Bootblocks aus dem ersten nichtflüchtigen Speicher durch den Prozessor, - Überprüfen, ob eine vorbestimmte Bedingung erfüllt ist, - Ausführen des ersten Programmcodes zum Starten des Computersystems aus dem ersten nichtflüchtigen Speicher durch den Prozessor, wenn die vorbestimmte Bedingung nicht erfüllt ist, und - Kopieren des zweiten Programmcodes zum Starten des Computersystems aus dem zweiten nichtflüchtigen Speicher in den ersten nichtflüchtigen Speicher und Ausführen des zweiten Programmcodes, wenn die vorbestimmte Bedingung erfüllt ist. Der Bootblock enthält eine Integritätsprüfung für den ersten Programmcode, wobei bei erfolgreicher Integritätsprüfung der erste Programmcode ausgeführt wird und bei erfolgloser Integritätsprüfung zunächst der zweite Programmcode in den ersten nichtflüchtigen Speicher kopiert und dann ausgeführt wird. Zur Überwachung von elektronischen IP-Geräten, welche mittels Internet verbunden oder auch zusätzlich Wi-Fi-fähig sind, ist das Computersystem nicht vorgesehen.

der Informationen zum Betrieb enthält, die unter anderem die Berechtigung eines Benutzers zur Benutzung von Mobilfunk- oder drahtlosen Datennetzen ausweisen sowie eine erste Kontrolleinheit vorhanden ist, die auf Basis der auf dem Benutzeridentifikationsmodul gespeicherten Informationen das Zustandekommen und die Durchführung des Datenaustausches steuert. Eine zweite Kontrolleinheit, ist dazu vorgesehen, eine durch die örtlich verfügbaren Mobilfunk- oder drahtlosen Datennetze ausgesprochene Zurückweisung dem Benutzeridentifikationsmodul bei der Anmeldung zum Mobilfunk- oder drahtlosen Datennetz durch geeignete Steuerung der ersten Kontrolleinheit im weiteren Verlauf des Anmeldeverfahrens mitzuteilen durch Umgehung oder Löschen übermittelter Information über die Zurückweisung unwirksam macht oder in der Dauer ihrer Wirkung beschränkt. Die Mobilfunkschnittstelle ist dazu ausgebildet, den Datenaustausch über ein GSM-, UMTS-, CDMA- oder WLAN-Netz durchzuführen. Mindestens eine der Kontrolleinheiten ist dazu ausgebildet, eine erfolglose Anmeldung wegen Zurückweisung durch sämtliche vor Ort verfügbaren Mobilfunk- oder drahtlosen Datennetze zu erkennen.
Aus US 2004/067761 A1 sind ein Verfahren sowie ein System zum Aufbau einer Datenverbindung zwischen zwei Geräten in einem mobilen Telekommunikationsnetz bekannt. Das System umfasst ein mobiles Endgerät, das eine Datenverbindung mit einer zweiten Vorrichtung über eine GPRS-Verbindung aufbauen kann. Das mobile Endgerät sendet dazu eine Kurznachricht mit seiner IP-Adresse an die zweite Vorrichtung.
Diese zweite Vorrichtung baut eine GPRS-Verbindung auf und erhält dadurch die IP-Adresse und sendet anschließend eine Kurznachricht mit seiner IP-Adresse an das mobile Endgerät zurück.
Sobald die beiden Geräte ihre IP-Adressen ausgetauscht haben, wird eine Datenverbindung zur Datenübertragung aufgebaut, mit der zum Beispiel Bilddateien übertragen werden können. Das in US 2004/067761 A1 beschriebene System eignet sich jedoch nicht zur Fernwartung.

Durch die EP-A1-1633115 ist eine tragbare Vorrichtung und ein Verfahren zum Betreiben eines mobilen Kommunikationsgerätes für einen Herzschrittmacher mit wenigstens einer Telemetriedatenschnittstelle bekannt geworden, die als Mobilfunkschnittstelle ausgelegt ist, einen Datenaustausch über ein Mobilfunk- oder drahtloses Datennetz ermöglicht, und einen Benutzeridentifikationsmodul aufweist.

### Das Problem:

Eine große Anzahl heutiger IP-Geräte werden überwiegend ferngewartet; zum Beispiel müssen Firmware-Updates durchgeführt werden. Für viele derartige IP-Geräte ist jedoch eine direkte Fernwartung über das ISDN-Netz oder über Funknetze nicht möglich, beispielsweise wenn ein neuer Firmware-Update mit großer Datenmenge aufgespielt werden soll, weil beim ISDN- und GSM-Netz die Datenübertragungsrate zu gering ist. Deshalb sind derartige IP-Geräte vernünftigerweise nur über WWAN zugänglich. Schließlich ist die IP-Adresse derartiger IP-Geräte in der Regel nicht bekannt, wenn es sich um eine dynamische, also wechselnd vergebene, IP-Adresse handelt.

### Technische Aufgabe:

Der Erfindung liegt die Aufgabe zugrunde, eine Schnittstelle für eine Fernwartung elektronischer IP-Geräten mit einer spezifischen Remote-Management-Software derart weiterzuentwickeln, dass auch große Datenmengen übertragen werden können sowie ein Verfahren zur Herstellung einer Kommunikationsverbindung für die Fernwartung von elektronischen IP-Geräten mit einer spezifischen Remote-Management-Software über eine Schnittstelle zu schaffen, welches die Übermittlung von großen Datenmengen erlaubt.

### Offenbarung der Erfindung sowie deren Vorteile:

Die Lösung der Aufgabe besteht bei einer Vorrichtung zur Verfügungstellung einer Schnittstelle zur Herstellung einer Kommunikationsverbindung für eine Fernwartung von elektronischen, mit dem Internet, vorzugsweise über einen Gateway, verbundenen IP-Geräten, in welche eine Remote-Management-Software implementiert ist, darin, dass zur Aktivierung der Übersendung eines zu übermittelnden Datenstromes, wie Up-Date einer Firmware, von der Vorrichtung eine SMS an das IP-Gerät gesendet wird, worauf dasselbe als Antwort seine IP-Adresse an die Vorrichtung sendet, so dass nach Erhalt und damit Bekanntsein der IP-Adresse in der Vorrichtung dieselbe nunmehr das IP-Gerät über WWAN an dessen IP-Adresse anzusprechen imstande ist und die Vorrichtung die vorgesehene Datenmenge zum IP-Gerät zu senden imstande ist. Bevorzugt erfolgt die Übersendung der IP-Adresse seitens des IP-Gerätes an die Vorrichtung ebenfalls als SMS.

Bei einem erfindungsgemäßen Verfahren zur Herstellung einer Kommunikationsverbindung für die Fernwartung von elektronischen, mit dem Internet, vorzugsweise über einen Gateway, verbundenen IP-Geräten über eine Vorrichtung, welche eine Schnittstelle zu Verfügung stellt, wobei im IP-Gerät eine Remote-Management-Software implementiert ist, besteht die Lösung der Aufgabe darin, dass zur Aktivierung der Übersendung eines zu übermittelnden Datenstromes bzw. der Datenmenge, wie Up-Date einer Firmware, die Vorrichtung über deren Schnittstelle eine SMS an das IP-Gerät sendet, worauf das betreffende IP-Gerät als Antwort seine IP-Adresse an die Vorrichtung sendet, so dass nach Erhalt und damit Bekanntsein der IP-Adresse in der Vorrichtung dieselbe das IP-Gerät nunmehr über WWAN an dessen IP-Adresse anspricht und die Vorrichtung die vorgesehene Datenmenge zum IP-Gerät sendet. Bevorzugt erfolgt die Übersendung der IP-Adresse seitens des IP-Gerätes an die Vorrichtung ebenfalls als SMS.

Der entscheidende Vorteil der erfindungsgemäßen Vorrichtung und des erfindungsgemäßen Verfahrens besteht gemeinsam darin, dass die aufgrund des Empfangs einer SMS ausgelöste und vorzugsweise mittels SMS übermittelte IP-Adresse des IP-Gerätes dieses nunmehr über die IP-Adresse direkt angesprochen werden kann, womit nunmehr große und sehr große Datenmengen übermittelt werden können. Weil nunmehr die IP-Adresse des IP-Gerätes in der Vorrichtung bekannt ist, kann das IP-Gerät durch die Vorrichtung direkt, zum Beispiel natürlich auch über ein Gateway, angesprochen werden, so dass nunmehr große Datenströme zum IP-Gerät übertragen und kommuniziert werden können.

In weiterer erfindungsgemäßer Ausgestaltung der Erfindung ist der bzw. die Gateways GSM (GPRS oder EDGE) oder UMTS (HSPA oder HSDPA) oder LTE oder höher -Gateway bzw. Gateways. Der Austausch der beiden SMSen von der Vorrichtung zum IP-Gerät und zurück erfolgt nur über GSM oder UMTS oder gegebenenfalls über LTE; beide Geräte verfügen über eine Mobilfunk-Telefonnummer. Bei der anschließenden Übermittlung der Datenmenge an das IP-Gerät erfolgt die Übermittlung wenigstens der sogenannten "letzten Meile" über WWAN, also über Funk.

In weiterer Ausgestaltung der erfindungsgemäßen Vorrichtung sowie des erfindungsgemäßen Verfahrens weist dieselbe bzw. dasselbe eine NGN-Schnittstelle auf, wobei die von der Vorrichtung über deren Schnittstelle an das IP-Gerät gesendete spezifische elektronische Aufforderung eine SMS ist.

In vorteilhafter Weise prüft das IP-Gerät nach Erhalt der von der Vorrichtung gesendeten SMS den Prioritätsstatus und ändert diesen gegebenenfalls auf WWAN und speichert diesen Zustand, wonach das IP-Gerät nunmehr seine IP-Adresse in einer SMS an die Vorrichtung sendet.

In vorteilhafter Weise prüft das IP-Gerät nach Erhalt der von der Vorrichtung gesendeten SMS den Prioritätsstatus und, falls WWAN nicht vorhanden ist, sendet das IP-Gerät eine SMS an die Vorrichtung des Inhalts, dass eine Verbindung zur Vorrichtung über WWAN nicht herstellbar ist.

In weiterer erfindungsgemäßer Weise wird beim Wechsel der 1. Priorität von WAN zu WWAN und der Aktivierung von WWAN das WWAN-Signal mittels eines Timers verzögert und während dieser Verzögerungszeit wird mindestens einmal überprüft, ob WWAN aktiv ist. Die Zeitverzögerung ist höchst vorteilhaft, um eine einwandfreie Verbindung durch GSM herzustellen. Nach Herstellung der GSM-Verbindung zum IP-Gerät sendet das IP-Gerät seine IP-Adresse als SMS an die IP-Basis.

Bei der Erfindung handelt es sich somit um ein sogenanntes Remote Control Center, RCC, um eine Schnittstellenvorrichtung, welche für ein entferntes IP-Gerät, in welches vorzugsweise eine Remote-Management-Software implementiert ist, eine Schnittstelle zur Verfügung stellt. Die Übermittlung der SMS von der Vorrichtung zum IP-Gerät erfolgt immer über Funk, wie GSM, mit sämtlichen weiteren Varianten, oder UMTS oder LTE, ebenfalls in beiden letztgenannten mit sämtlichen weiteren Varianten. Die Antwort-Übermittlung vom IP-Gerät zur Vorrichtung erfolgt vorzugsweise ebenfalls über Funk, wie GSM, mit sämtlichen weiteren Varianten, oder UMTS oder LTE, ebenfalls in beiden letztgenannten mit sämtlichen weiteren Varianten. Die anschließend erfolgende Übermittlung der Datenmenge, wie Firmware-Update, zum IP-Gerät, erfolgt, wenigstens in der sogenannten "letzten Meile", ebenfalls immer über Funk, wie GSM, mit sämtlichen weiteren Varianten, oder UMTS oder LTE, ebenfalls in beiden letztgenannten mit sämtlichen weiteren Varianten.

Kurzbeschreibung der Zeichnung, in der zeigt
- Figur 1: Hauptansicht des Server Tools, welcher eine SMS an ein entferntes IP-Gerät sendet, damit dieses seine aktuelle dynamische IP- Adresse an die Vorrichtung als SMS zurücksendet
- Figur 2: den Erhalt der SMS, wobei nach Erhalt der IP-Adresse des IP-Gerätes der Benutzer befähigt wird, nunmehr direkt über das Web-Interface Zugriff zu erhalten, indem der Benutzer eine Bedientaste der Vorrichtung betätig und dadurch die Übermittlung der Datenmenge an das IP-Gerät auslöst und
- Figur 3: ein Flowchart zum Ablauf des erfindungsgemäßen Verfahrens, dessen Textelemente ausdrücklich zur Erfindung gehörend sind.

### Beschreibung eines bevorzugten Ausführungsbeispiels:

Bei der Erfindung handelt es sich um ein SMS-Remote-Management, ausgelöst bevorzugt über einen Gateway bzw. Protokollumsetzer, welcher es Netzwerken, die auf völlig unterschiedlichen Protokollen basieren, erlaubt, miteinander zu kommunizieren. Mobilfunkseitig hinsichtlich des oder der Gateways kann es sich dabei um GSM (EDGE, 2GPP, 3GPP oder höher) oder UMTS oder LTE handeln; auf der Festnetzseite, auf der sich die Vorrichtung befindet, sind eine oder mehrere Funk-Techniken und/oder IP und somit generell NGN vorhanden. Einerseits muss diese Funktion in der Firmware des Gateways implementiert werden, andererseits muss in der Vorrichtung ein SW-Tool Verwendung finden, welches eine eingehende SMS dann auszuwerten imstande ist. Es sind allerdings auch Netzwerke möglich, welche keinen Gateway benötigen.

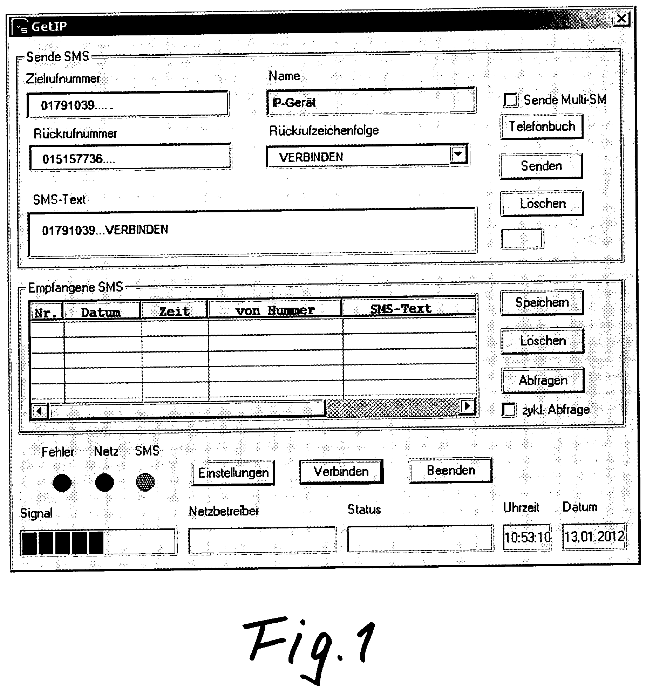

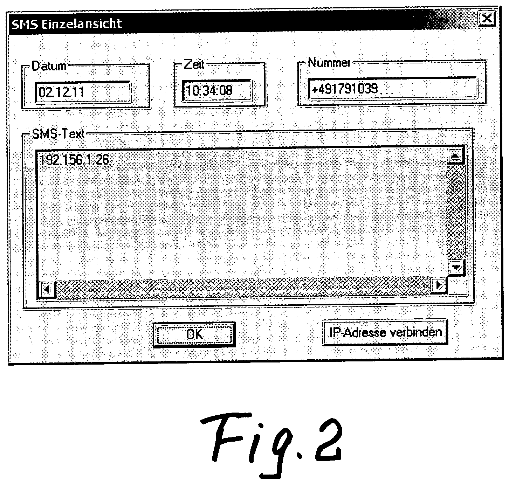

Figur 1 zeigt die Hauptansicht einer Anzeige der Vorrichtung zur Übermittlung der SMS-Aufforderung per Funk zur Auslösung der Übersendung der IP-Adresse ebenfalls per Funk eines IP-Gerätes. Es ist ersichtlich, dass zum Beispiel von der Vorrichtung, welche auch als IP-Basis bezeichnet wird, an die Telefonnummer "0179103...." des IP-Gerätes eine SMS gesendet wird mit der Aufforderung "Verbinden". Gemäß der Figur 2 sendet nach Erhalt der SMS nunmehr das IP-Gerät seine IP-Adresse, hier zum Beispiel 184.14.114. ..., vorzugsweise ebenfalls im Rahmen einer SMS, an die Funknetz-Telefonnummer der Vorrichtung, IP-Basis, die beispielsweise +491511517.... lautet.

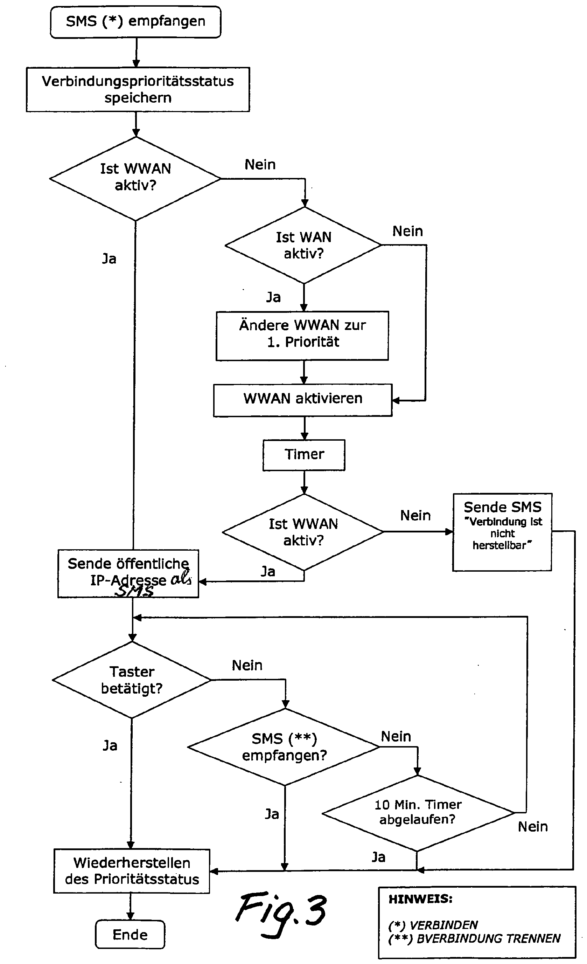

Ein Flowchart zum Ablauf des erfindungsgemäßen Verfahrens ist anschließend anhand von Figur 3 beschrieben. Es wird davon ausgegangen, dass die Vorrichtung, die auch als Schnittstellenvorrichtung bezeichnet werden kann und die im Folgenden auch als IP-Basis bezeichnet wird, über WAN mit dem Internet verbunden werden kann. Die Schnittstellenvorrichtung, die IP-Basis, muss IP-fähig sein und wenigstens zeitweise eine IP-Adresse aufweisen können, weil sie zur Übermittlung eines Datenstromes an das IP-Gerät über dessen IP-Adresse mit dem IP-Gerät zu konnektieren imstande sein muss.

Es wird von Folgendem ausgegangen:

| | |
|---|---|
| Priorität 1: | die IP-Basis, mit Ausstattung für GSM oder UMTS, ist an WAN angeschlossen; das entfernte IP-Gerät, ebenfalls mit Ausstattung für GSM oder UMTS, ist wenigstens zweikanalfähig bzw. das IP-Gerät besitzt wenigstens 2 Kanäle (WWAN ist inaktiv) |
| Priorität 2: | GSM Kanal 1 IP-Gerät (GSM) |
| Priorität 3: | GSM Kanal 2 IP-Gerät (UMTS) |

Dabei bedeutet hier Verbindungspriorität bzw. Priorität den Status der Netzwerkverbindungen im Vorfeld des Remotemanagements, wie es in der Vorrichtung vorliegt.

Von der IP-Basis wird nun eine spezifische elektronische Aufforderung, welche eine SMS ist, über Funk in einen der beiden GSM Kanäle mit Prioritäten 1, 2 des IP-Gerätes gesendet, also entweder nach dem Kanal mit Priorität 1 oder nach dem Kanal mit Priorität 2; beispielsweise mit dem Textbefehl "Verbinden"; dieser Status wird, wie vorstehend angegeben, in dem IP-Gerät gesichert. Anschließend überprüft das IP-Gerät, ob WWAN aktiv ist. Wie vorstehend ausgegangen, ist das nicht der Fall, weshalb das IP-Gerät überprüft, ob WAN aktiv ist. Von diesem Zustand wird ausgegangen. Da WAN aktiv ist, ändert daraufhin das IP-Gerät die Anschluss-Prioritäten zu
Priorität 1: GSM Kanal 1 IP-Gerät, also WWAN wird zu 1. Priorität
Priorität 2: WAN
Priorität 3: GSM Kanal 2 IP-Gerät
und aktiviert WWAN, um die Verbindung durch Priorität 1, GSM Kanal 1 IP-Gerät, aufzubauen. Nunmehr wird die Versendung der Daten über GSM Kanal 1 IP-Gerät durchgeführt. Dieser Kanal ist konfiguriert durch die Standardeinstellung (default) mit dem APN und der zu wählenden (Telefon-) Nummer. Nach einer einstellbaren Zeitverzögerung durch einen Timer überprüft das IP-Gerät erneut, ob WWAN aktiv ist und ob das IP-Gerät nunmehr über WWAN mit der IP-Basis verbunden ist, wovon ausgegangen wird. Die Zeitverzögerung ist dazu da, um abzuwarten, ob eine WWAN-Verbindung möglich ist, da der Verbindungsaufbau u.U. im Sekundenbereich liegen kann. Nach Herstellung einer GSM-Verbindung sendet das IP-Gerät nunmehr seine IP-Adresse als SMS an die IP-Basis. Ist WWAN also aktiv, so wird vom IP-Gerät dessen IP-Adresse an die Telefonnummer der IP-Basis gesendet und vom IP-Gerät der Prioritätsstatus gespeichert. Nunmehr kann die IP-Basis an die übermittelte IP-Adresse des IP-Gerätes den zu übermittelnden Datenstrom, beispielsweise ein Firmware-Update, zum Beispiel über WWAN im UMTS-Netz, direkt an das IP-Gerät übersenden.

Ist nach Erhalt der von der Vorrichtung gesendeten SMS "Verbinden" weder WWAN noch WAN aktiv, so wird vom IP-Gerät WWAN aktiviert.

Ist hingegen WWAN aktiv, besitzt also die 1. Priorität, so wird nach Erhalt der Aufforderung durch SMS seitens der Vorrichtung und der Speicherung des Verbindungsstatus die IP-Adresse des IP-Gerätes als SMS sofort an die Telefonnummer der IP-Basis gesendet, wonach die Übermittlung der Daten an die IP-Adresse des IP-Gerätes erfolgt.

Es ist wesentlich, dass die Prioritäten mittels der Software fest eingestellt oder frei gewählt werden können.

Erläuterungen, die zum Anmeldetext gehören (aus WIKIPEDIA, leicht gekürzt):
APN = Access Point Name ("Zugangspunkt" genannt) ist der Name eines Anschlusspunktes in einem GPRS(s. unten)-Backbone, welcher Zugang zu einem externen Paket-Datennetz für ein mobiles Endgerät ermöglicht
EDGE = Enhanced Data Rates for GSM Evolution bezeichnet eine Technik zur Erhöhung der Datenübertragungsrate in GSM-Mobilfunknetzen durch Einführung eines zusätzlichen Modulationsverfahrens. Mit EDGE werden die Datendienste GPRS zu E-GPRS (Enhanced GPRS) und HSCSD zu ECSD erweitert.
Gateway = Ein Gateway (deutsch auch Protokollumsetzer) erlaubt es Netzwerken, die auf völlig unterschiedlichen Protokollen basieren, miteinander zu kommunizieren. Ein Router ist ebenfalls ein Gateway.
GPRS = General Packet Radio Service (deutsch: "Allgemeiner paketorientierter Funkdienst") ist die Bezeichnung für den paketorientierten Dienst zur Datenübertragung in GSM- und UMTS-Netzen.
GSM = Das Global System for Mobile Communications ist ein Standard für volldigitale Mobilfunknetze (z.B. D- und E-Netze), der hauptsächlich für Telefonie, aber auch für leitungsvermittelte und paketvermittelte Datenübertragung sowie Kurzmitteilungen (Short Messages) genutzt wird.
3GPP = 3rd Generation Partnership Project (3GPP) ist eine weltweite Kooperation von Standardisierungsgremien für die Standardisierung im Mobilfunk; konkret für UMTS, GERAN (GSM) und LTE.
HSCSD, GPRS, EDGE = Erweiterungen des Standards GSM
HSPA = High Speed Packet Access (mit weiteren Generationen) ist eine Erweiterung des UMTS, die höhere Datenübertragungsraten ermöglicht.
ISDN = Integrated Services Digital Network, ist ein internationaler Standard für ein digitales, diensteintegrierendes Telekommunikationsnetz.
IP = Eine IP-Adresse ist eine Adresse in Computernetzen, die, wie z. B. das Internet, auf dem Intemetprotokoll (IP, auch public intemetprotocol), Netzwerkprotokoll, basieren (Postanschrift auf Briefumschlag). Sie wird Geräten zugewiesen, welche an das Netz angebunden sind und macht die Geräte so adressierbar und damit erreichbar.
IP-Gerät = Elektronisches Gerät, dem eine IP Adresse zugewiesen werden kann bzw. zugewiesen worden ist
LAN = Local Area Network, lokales Netzwerk, ist ein Rechnernetz, das die Ausdehnung von PAN, Personal Area Networks, übertrifft, die Ausdehnung von MAN, Metropolian Area Networks, WAN, Wide Area Networks, und GAN, Global Area Networks, aber nicht erreicht. Ein LAN ist dabei in seiner Ausdehnung ohne Zusatzmaßnahmen auf 500 Meter beschränkt.
LTE = auch als 4G bezeichnet, ist ein neuer Mobilfunkstandard und UMTS-Nachfolger und definiert eine neue Funkschnittstelle. Das Grundschema von UMTS ist bei LTE beibehalten. Die LTE-Übertragungstechnik ist für einen Frequenzbereich von 700 bis 2.700 MHz ausgelegt. Die Übertragungskanäle können flexibel zwischen 1,25 und 20 MHz variieren. Das erleichter die Anpassung an die weltweit unterschiedlichen Frequenzbereiche. Das Übertragungsverfahren basiert auf OFDM (mit 64QAM) und SC-FDM. Der Zugriff auf die Funkschnittstelle erfolgt im Downlink mit OFDMA und im Uplink mit SC-FDMA. Zusätzlich ist MIMO (Multiple Input Multiple Output, Mehrfach-Antennen-System) vorgesehen.
MAN = Metropolian Area Networks (siehe LAN)
Netzwerkprotokoll = ist eine exakte Vereinbarung in der Informatik, nach der Daten zwischen Computern bzw. Prozessen ausgetauscht werden, die durch ein Netz miteinander verbunden sind.
NGN = Next Generation Network, bezeichnet in der Telekommunikation ein Netzwerk, welches traditionelle leitungsvermittelnde Telekommunikationsnetze (Telefonnetze, Kabelfernsehnetze, Mobilfunknetze, u.a.) durch eine einheitliche paketvermittelnde Netzinfrastrukur und -architektur ersetzt und zu den älteren Telekommunikationsnetzen kompatibel ist, wobei unterschiedliche Netzfunktionen, wie Transport, Dienst und die Kontrollfunktion, auf unterschiedlichen (logischen) Netzebenen realisiert werden. NGN bezeichnet auch als Schlagwort die derzeitig erfolgende Umstellung der bestehenden Telekommunikationsnetze auf IP-Technologie, da das Internet Protokoll die vorherrschende Wahl zur Implementierung von paketvermittelnden Netzen ist.
PAN = Personal Area Networks (siehe LAN)
Protokoll = Im Kontext der Informations-Technologien (IT) sind Protokolle Regeln für die Kommunikation zwischen Computern, nach denen die Verbindung und Datenübertragung ablaufen. Ein Protokoll regelt die verwendete Syntax, Semantik und Synchronisation der Kommunikation.
SMS = Short Message Service, Telekommunikationsdienst zur Übertragung von Textnachrichten für den GSM-Mobilfunk sowie heute auch für Festnetze. Über SMS-Gateways können weitere Dienste angebunden werden.
SW = Short Wave, Bezeichnung von kurzen Radiowellen (oder Dekameterwellen oder HF für *high frequency*)
TCP/IP-Referenzmodell = Zur Gliederung der Kommunikationsaufgaben werden in Netzwerken funktionale Ebenen (layer), unterschieden. Maßgebend für die Internetprotokollfamilie ist dabei das TCP/IP-Referenzmodell, Transmission Control Protocol/Internet Protocol. Es beschreibt den Aufbau und das Zusammenwirken der Netzwerkprotokolle aus der Internet-Protokoll-Familie und gliedert sie in vier aufeinander aufbauende Schichten.
UMTS = Universal Mobile Telecommunications System ist ein Mobilfunkstandart der dritten Generation (3G), mit dem deutlich höhere Datenübertragungsraten als mit dem Mobilfunkstandard der zweiten Generation (2G), dem GSM-Standard oder bei Edge möglich sind.
Wi-Fi = Synonym für WLAN = Wireless Local Area Network (deutsch: drahtloses lokales Netzwerk) bezeichnet ein lokales Funknetz, wobei meistens ein Standard der IEEE-802.11-Familie gemeint ist.
WAN = Wide Area Network, Weitverkehrsnetz, oder GAN, ist ein Rechnemetz, welches sich im Unterschied zu einem LAN oder MAN über einen sehr großen geografischen Bereich erstreckt.
WWAN = Wireless Wide Area Network

## Patentansprüche

1. System umfassend eine Vorrichtung zur Verfügungstellung einer Schnittstelle zur Herstellung einer Kommunikationsverbindung sowie elektronische mit dem Internet, vorzugsweise über einen Gateway, verbundene IP-Geräte, wobei zur Aktivierung der Übersendung eines zu übermittelnden Datenstromes, wie Up-Date einer Firmware, von der Vorrichtung eine SMS an das IP-Gerät gesendet wird, worauf dasselbe als Antwort seine IP-Adresse an die Vorrichtung sendet, so dass nach Erhalt und damit Bekanntsein der IP-Adresse in der Vorrichtung dieselbe nunmehr das IP-Gerät über WWAN an dessen IP-Adresse anzusprechen imstande ist und die Vorrichtung die vorgesehene Datenmenge zum IP-Gerät sendet, **dadurch gekennzeichnet, dass** im IP-Gerät eine Remotemanagement-Software implementiert ist, mit der eine Fernwartung durchführbar ist, wobei das IP-Gerät nach Erhalt der von der Vorrichtung gesendeten SMS einen Prioritätsstatus prüft und, falls WWAN nicht vorhanden ist, eine SMS an die Vorrichtung sendet des Inhalts, dass eine Verbindung nicht herstellbar ist.

2. System nach Anspruch 1, **dadurch gekennzeichnet, dass** die Übermittlung der IP-Adresse des IP-Gerätes ebenfalls innerhalb einer an die Vorrichtung übermittelten SMS erfolgt.

3. System nach Anspruch 1, **dadurch gekennzeichnet, dass** der bzw. die Gateways GSM, GPRS oder EDGE, oder UMTS, HSPA oder HSDPA, oder LTE oder höher -Gateway bzw. Gateways sind.

4. System nach Anspruch 1, **dadurch gekennzeichnet, dass** das IP-Gerät nach Erhalt der von der Vorrichtung gesendeten SMS den Prioritätsstatus prüft und gegebenenfalls auf WWAN ändert und diesen Zustand speichert und nunmehr die IP-Adresse in einer SMS an die Vorrichtung sendet.

5. Verfahren zur Herstellung einer Kommunikationsverbindung von elektronischen, mit dem Internet, vorzugsweise über einen Gateway, verbundenen IP-Geräten über eine Vorrichtung, welche eine Schnittstelle zu Verfügung stellt, wobei zur Aktivierung der Übersendung eines zu übermittelnden Datenstromes, wie Up-Date einer Firmware, die Vorrichtung über deren Schnittstelle eine SMS an das IP-Gerät sendet, worauf das betreffende IP-Gerät als Antwort seine IP-Adresse an die Vorrichtung sendet, so dass nach Erhalt und damit Bekanntsein der IP-Adresse in der Vorrichtung dieselbe das IP-Gerät nunmehr über WWAN an dessen IP-Adresse anspricht und die Vorrichtung die vorgesehene Datenmenge zum IP-Gerät sendet, **dadurch gekennzeichnet, dass** im IP-Gerät eine Remotemanagement-Software implementiert ist, mit der eine Fernwartung durchführbar ist, wobei das IP-Gerät nach Erhalt der von der Vorrichtung gesendeten SMS den Prioritätsstatus prüft und, falls WWAN nicht vorhanden ist, eine SMS an die Vorrichtung sendet des Inhalts, dass eine Verbindung nicht herstellbar ist.

6. Verfahren nach Anspruch 5, **dadurch gekennzeichnet, dass** die Übermittlung der IP-Adresse des IP-Gerätes ebenfalls innerhalb einer an die Vorrichtung übermittelten SMS erfolgt.

7. Verfahren nach Anspruch 5, **dadurch gekennzeichnet, dass** die Vorrichtung eine NGN-Schnittstelle aufweist und dass die von der Vorrichtung über deren Schnittstelle an das IP-Gerät gesendete spezifische elektronische Aufforderung eine SMS ist.

8. Verfahren nach Anspruch 5, **dadurch gekennzeichnet, dass** beim Wechsel der 1. Priorität von WAN zu WWAN und der Aktivierung von WWAN das WWAN-Signal mittels eines Timers verzögert wird und während dieser Verzögerungszeit überprüft wird, ob WWAN aktiv ist.

## Claims

1. System comprising an apparatus for providing an interface for the purpose of establishing a communication link as well as electronic IP devices connected, preferably across a gateway, to the Internet, wherein for activating the transfer of a data stream to be transmitted, such as an update of firmware, an SMS is sent from the apparatus to the IP device, whereupon the same, in response, sends its IP address to the apparatus, such that after receipt, and therewith acquisition of the IP address in the apparatus, the same is now capable of addressing the IP device at its IP address across WWAN and the apparatus sends the specified data volume to the IP device, **characterized in that** in the IP device a remote management software is implemented with which remote maintenance can be carried out, wherein the IP device, after receipt of the SMS sent by the apparatus, checks a priority status and, if WWAN is not available, sends an SMS to the apparatus indicating that a link cannot be established.

2. System as in claim 1, **characterized in that** the transmission of the IP address of the IP device also takes place within an SMS sent to the apparatus.

3. System as in claim 1, **characterized in that** the gateway or gateways is or are GSM, GPRS or EDGE or UMTS, HSPA or HSDPA or LTE or a higher gateway or gateways.

4. System as in claim 1, **characterized in that** the IP device checks the priority status after receipt of the SMS sent by the apparatus and, if indicated, changes it to WWAN and stores this status and now transmits the IP address in an SMS to the apparatus.

5. Method for establishing a communication link of electronic IP devices connected, preferably across a gateway, to the Internet across an apparatus that provides an interface, wherein for the activation of the transfer of a data stream, such as an update of firmware, to be transferred the apparatus sends across its interface an SMS to the IP device, whereupon the particular IP device in response sends its IP address to the apparatus such that, after receipt, and therewith acquisition of the IP address in the apparatus, the same now addresses the IP device at its IP address across WWAN and the apparatus sends the specified data volume to the IP device, **characterized in that** in the IP device a remote management software is implemented with which remote maintenance can be carried out, wherein the IP device, after receipt of the SMS sent from the apparatus, checks the priority status and, if WWAN is not available, sends an SMS to the apparatus indicating that a link cannot be established.

6. Method as in claim 5, **characterized in that** the transmission of the IP address of the IP device also takes place within an SMS transmitted to the apparatus.

7. Method as in claim 5, **characterized in that** the apparatus comprises an NGN interface and that the specific electronic request sent from the apparatus across its interface to the IP device is an SMS.

8. Method as in claim 5, **characterized in that** in a change of priority 1 from WAN to WWAN and the activation of WWAN, the WWAN signal is delayed by means of a timer and du ring this delay time a check is carried out to determine whether WWAN is active.

## Revendications

1. Système comprenant un dispositif pour la mise à disposition d'une interface destinée à établir une liaison de communication et des appareils électroniques IP reliés à Internet, de préférence par l'intermédiaire d'une passerelle, dans lequel, pour activer l'envoi d'un flux de données à transmettre, tel que la mise à jour d'un micrologiciel, un SMS est envoyé par le dispositif à l'appareil IP, puis ce dernier envoie son adresse IP au dispositif en tant que réponse, de manière à ce que ce dernier, après avoir reçu et donc pris connaissance de l'adresse IP dans le dispositif, soit alors en mesure de répondre au dispositif IP par l'intermédiaire du réseau WWAN à son adresse IP et à ce que le dispositif envoie la quantité prévue de données à l'appareil IP,
**caractérisé en ce qu'**un logiciel de gestion à distance, au moyen duquel une maintenance à distance peut être effectuée, est mis en oeuvre dans l'appareil IP, dans lequel l'appareil IP vérifie un état de priorité après réception du SMS envoyé par l'appareil et, en cas d'absence de réseau WWAN, envoie à l'appareil un SMS dont le contenu indique qu'une liaison ne peut pas être établie.

2. Système selon la revendication 1, **caractérisé en ce que** la transmission de l'adresse IP de l'appareil IP s'effectue également dans un SMS transmis au dispositif.

3. Système selon la revendication 1, **caractérisé en ce que** la ou les passerelles est ou sont une ou des passerelles GSM, GPRS ou EDGE, ou UMTS, HSPA ou HSDPA, ou LTE ou supérieure(s).

4. Système selon la revendication 1, **caractérisé en ce que** l'appareil IP, après réception du SMS envoyé par le dispositif, vérifie l'état de priorité et, si nécessaire, bascule sur le réseau WWAN, mémorise cet état et envoie alors l'adresse IP dans un SMS au dispositif.

5. Procédé pour établir une liaison de communication entre des appareils électroniques IP reliés à l'Internet par le biais d'un dispositif mettant à disposition une interface, de préférence par l'intermédiaire d'une passerelle, dans lequel, pour activer l'envoi d'un flux de données à transmettre, tel que la mise à jour d'un micrologiciel, le dispositif envoie un SMS à l'appareil IP par l'intermédiaire de son interface, puis l'appareil IP concerné envoie son adresse IP au dispositif en tant que réponse, de manière à ce que ce dernier, après avoir reçu et donc pris connaissance de l'adresse IP dans le dispositif, réponde alors à l'appareil IP par l'intermédiaire du réseau WWAN à son adresse IP et à ce que le dispositif envoie la quantité prévue de données à l'appareil IP,
**caractérisé en ce qu'**un logiciel de gestion à distance, au moyen duquel une maintenance à distance peut être effectuée, est mis en oeuvre dans l'appareil IP, dans lequel l'appareil IP vérifie l'état de priorité après réception du SMS envoyé par l'appareil et, en cas d'absence de réseau WWAN, envoie à l'appareil un SMS dont le contenu indique qu'une liaison ne peut pas être établie.

6. Procédé selon la revendication 5, **caractérisé en ce que** la transmission de l'adresse IP de l'appareil IP s'effectue également dans un SMS transmis au dispositif.

7. Procédé selon la revendication 5, **caractérisé en ce que** le dispositif comporte une interface NGN et **en ce que** la requête électronique spécifique envoyée par le dispositif à l'appareil IP par l'intermédiaire de son interface est un SMS.

8. Procédé selon la revendication 5, **caractérisé en ce que**, lors d'un basculement de première priorité du réseau WAN au réseau WWAN et de l'activation du réseau WWAN, le signal WWAN est retardé au moyen d'une temporisation et il est vérifié pendant ce temps de retard si le réseau WWAN est actif.
